(19) Europäisches Patentamt
European Patent Office
Office européen des brevets

(11) **EP 4 017 097 A1**

(12) **EUROPEAN PATENT APPLICATION**

(43) Date of publication:
**22.06.2022 Bulletin 2022/25**

(21) Application number: **20214872.2**

(22) Date of filing: **17.12.2020**

(51) International Patent Classification (IPC):
*H04W 36/00* (2009.01)   *H04W 24/08* (2009.01)
*H04W 64/00* (2009.01)   *H04W 36/30* (2009.01)
*H04W 48/16* (2009.01)

(52) Cooperative Patent Classification (CPC):
**H04W 36/0083;** H04W 24/08; H04W 36/30;
H04W 48/16; H04W 64/00

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Robert Bosch GmbH
70442 Stuttgart (DE)**

(72) Inventors:
• **Marchenko, Nikolaj
  70180 Stuttgart (DE)**
• **Ginthoer, David Osamu
  71229 Leonberg (DE)**

(54) **A DEVICE AND METHOD FOR OPERATING A WIRELESS COMMUNICATION NETWORK**

(57)   A device and method for operating a wireless communication network (100), wherein a communication channel (112) of the wireless communication network (100) at least temporarily connects a first device (104) to an access point (102) in the wireless communication network (100), wherein the method is characterized by determining a position of the first device (104) or of a second device (106) that is moving relative to the access point (102), looking up a channel quality of the communication channel (112) that is assigned to the position, and outputting the channel quality.

**FIG. 1**

Processed by Luminess, 75001 PARIS (FR)

EP 4 017 097 A1

## Description

Background

The invention concerns a device and method for operating a wireless communication network.

R. Di Taranto, S. Muppirisetty, R. Raulefs, D. Slock, T. Svensson, and H. Wymeersch, "Location-aware communications for 5g networks: How location information can improve scalability, latency, and robustness of 5g", IEEE Signal Processing Magazine, vol. 31, no. 6, pp. 102-112, 2014 discloses aspects of operating a wireless communication network.

Disclosure of the invention

The following disclosure provides aspect that further improve a wireless communication network.

A method for operating a wireless communication network, wherein a communication channel of the wireless communication network at least temporarily connects a first device to an access point in the wireless communication network, comprises determining a position of the first device or of a second device that is moving relative to the access point, looking up a channel quality of the communication channel that is assigned to the position, and outputting the channel quality. The channel quality is predicted from a database comprising predetermined channel quality values. A channel quality value indicates the quality of the channel when the second device is at a certain position. In one aspect, the position of the second device is a predicted position and the predicted position is mapped to a corresponding channel quality value to anticipate a future channel quality. In another aspect, the position is a present position of the second device and the present position is mapped to a corresponding channel quality value to anticipate the future channel quality. The latter implicitly includes a prediction of the position of the second device.

Preferably, the method comprises determining the position of the first device, measuring the channel quality of the communication channel when the first device is at this position, and storing the measured channel quality of the communication channel assigned to this. This way, the database is built that contains a mapping of positions of the first device to channel quality values.

Preferably, the method comprises receiving a message comprising the measured channel quality of the communication channel and comprising the position. This way, the first device may measure and report the channel quality e.g. to a network entity.

Preferably, determining the position of the first device comprises receiving position information for the first device and determining the position of the first device depending on a pattern representing a movement of the first device, and/or determining the position of the second device comprises receiving position information for the second device and determining the position of the second device depending on a pattern representing a movement of the second device. The pattern allows a better prediction of a future position of the first or second device. Using the prediction of the future position to look up the channel quality for the predicted future position allows a better prediction of the channel quality.

Preferably, the method comprises storing the channel quality assigned to a position of the first device, in particular assigned to the position of the first device when the channel quality is measured or assigned to the position of the first device when the message is received, and assigned to the position of the second device, in particular assigned to the position of the second device when the channel quality is measured or assigned to the position of the second device that is received in the message. This way, the database is built for different positions of the first or second device.

The method may comprise, when the channel quality is below a threshold, determining at least one parameter for the communication channel and otherwise not changing the parameter. This allows an adaptation process for the channel if the channel quality is too poor.

The method may comprise, when the channel quality is below a threshold, selecting another communication channel of the wireless communication network to the same access point or to a different access point for at least temporarily connecting the first device and otherwise not selecting another communication channel. This allows an adaptation for the channel to the same access point or a handover to another access point when the channel quality is too poor.

Preferably, the method comprises determining and/or storing the channel quality for different positions of the first device and/or the second device. This way, the database comprises a map that is learned from movements.

Preferably, the method comprises determining a position of a third device that is moving relative to the access point, looking up the channel quality that is assigned to the position of the first device and that is assigned to the position of the second device and that is assigned to the position of the third device. The first device may be a user equipment that is capable of communicating via the communication channel. The second device may be a mobile obstacle. The mobile obstacle may be capable to cause interference to the communication channel. The mobile obstacle may be incapable of communicating via the communication channel. The third mobile device may be another mobile obstacle or another user equipment.

Preferably, the method comprises determining the position of the second device and determining the position of the third device, measuring the channel quality when the second device is at this position of the second device, and when the third device is at this position of the third device, and storing the channel quality assigned to this position of the second device and assigned to this position of the third device.

Preferably, the method comprises detecting that no value for the channel quality is available at the position of the first device, determining the channel quality depending on a channel quality that is stored for another position for the first device. When the first device enters a region, where no values are captured yet, the channel quality is determined for example with a mathematical model for extrapolating or interpolating neighboring values to receive a prediction value that can be used.

A device for operating a wireless communication network is adapted to perform steps of the method.

A computer program may comprise instructions for a computer that, when executed by the computer, cause the computer to perform the steps according to the method.

Fig. 1 schematically depicts a part of a communication network,

Fig. 2 schematically depicts steps in a method of operating the communication network,

Fig. 3 schematically, a predictor,

Fig. 4 an example workflow with the predictor.

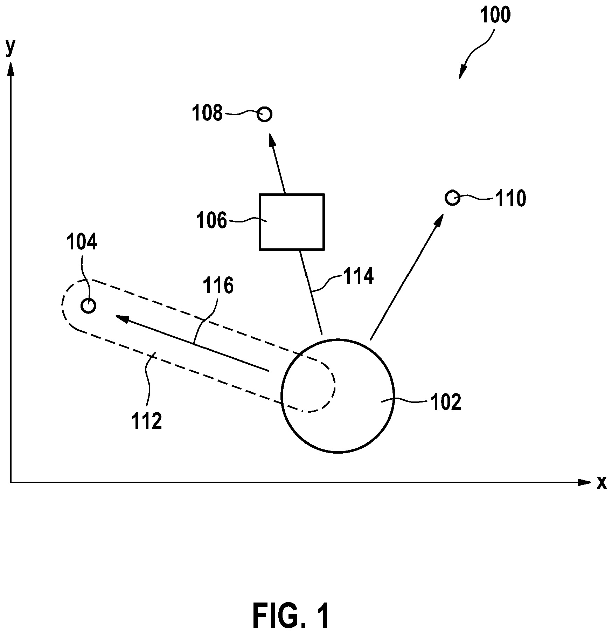

Figure 1 depicts a wireless communication network 100. The wireless communication network 100 comprises an access point 102, a first device 104, a second device 106, a third device 108 and a fourth device 110.

According to an example, the wireless communication network 100 is a cellular system, e.g. according to the long term evolution, LTE, or 5G standard.

The first device 104, the third device 108 and the fourth device 110 are in the example user equipment, e.g. mobile phones.

The wireless access point 102 may be a single base station, BS, or a distributed base station.

The first device 104 and the access point 102 are in the example configured to be connected by a communication channel 112.

The second device 106 is depicted in a line of sight, LOS, 114 between the access point 102 and the third device 108. The second device 106 is in the example a mobile obstacle MO.

Obstacle in this context may refer to an object that is of a size or comprises a material that can block or interfere with the communication through the communication channel 112 between the first device 104 and the access point 102. The second device 106 may block or interfere with the communication when it is in a line of sight, LOS, 116 between the first device 104 and the access point 102. The second device 106 may interfere with the communication when it is not in the LOS 116. The second device 106 may for example cause a reflection of a radio signal for the communication channel 112 that that reduces a channel quality of the communication channel 112.

The MO may be any object of large dimensions such that it can potentially influence the channel quality, e.g. by blocking LOS for devices placed in-line with the obstacle and the BS or create reflections that cause temporarily stronger signal interference. In a factory environment these could be created by e.g. an automated guided vehicle, AGV, or any other type of carrier.

The wireless communication network 100 may be configured to determine the channel quality from channel state information, CSI. The CSI may be reported via a CSI reporting mechanism as described in 3GPP TS 38.214 V16.3.0 Section 5.2. The wireless communication network 100 may be configured to determine a channel quality indicator, CQI, that is included in the CSI for the communication channel 112 periodically. The CQI is for example determined and reported by the first device 104 within the wireless communication network 100 to the wireless access point 102.

The CQI of the first device 104 is associated in the example with a measured property of the communication channel 112 between the first device 104 and the access point 102.

In one aspect, a value of the CQI is an indication for the channel quality.

The wireless communication network 100 may be configured to determine a signal to noise ratio, SNR, for the communication channel 112 periodically.

In one aspect, a value of the SNR is the indication for the channel quality.

The wireless communication network 100 may be configured for adaptive modulation and coding schemes, AMC. AMCs are applied in order to maximize a data throughput in the wireless communication network 100.

In the example, the access point 102 is configured to assign a suitable AMC for the first device 104 according to the indication of the channel quality.

In the example, the AMC defines a modulation scheme and a code rate. The AMC is for example selected from available AMCs depending on a target block error rate, BER. Achieving the BER allows optimizing the data throughput in the wireless communication network 100.

According to the method described below, a database or a map is created that stores the indication of the channel quality for a specific location of the first device 104 and the second device 106.

If the first device 104 or the second device 106 is moving, the database or the map can be used to predict the quality of the communication channel 112 according to both positions. The database or map may be created and used for a plurality of devices including the third device 108 and the fourth device 110. These devices may be user equipment, UEs, or MOs.

Positions of the devices are given in the example by coordinates x, y in a two-dimensional coordinate system. Other ways of providing the positions, e.g. by Global Positioning System, GPS, data or polar coordinates may be used as well.

If the first device 104 or the second device 106 enters a region where no channel quality value has been captured yet, a mathematical model may be used to extrapolate a neighboring value or interpolate neighboring values to receive a prediction value that can be used.

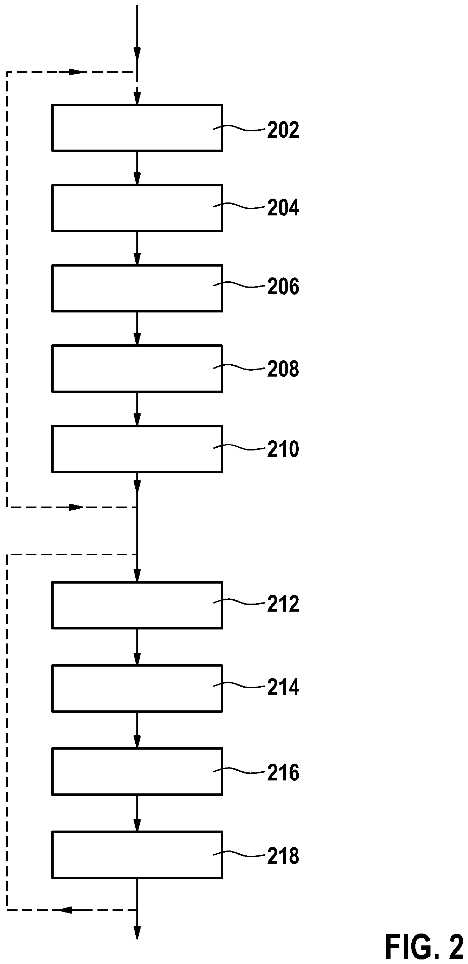

The method of operating the communication network 100 is described below with reference to figure 2.

In one aspect, the database or map is generated. In another aspect, the generated database or map is used. The steps of the method of one of these aspects may be performed separately and independently. When a generated database or map is available, the steps for generating these may be omitted or used for updating entries therein.

The method comprises a step 202 of determining the position of the second device 106.

The step 202 may comprise determining the position of the second device 106 and determining the position of the third device 108 and/or the fourth device 110.

Afterwards, in a step 204 the channel quality of the communication channel 112 is measured when the second device 106 is at this position of the second device 106. In the example, the first device 104 measures the channel quality of the communication channel 112 e.g. based on CQI, SNR or any other channel quality metric, CQM.

The step 204 may comprise measuring the channel quality of the communication channel 112 when the second device 106 is at this position and when the third device 108 is at its respective position.

Afterwards, in a step 206 a message is transmitted that comprises the measured channel quality of the communication channel 112. The message may comprise the position of the second device 106. The message may comprise the position of the first device 104 as well. The message may comprise the position of the third device 108 and/or the fourth device 110 as well.

In the example, the first device 104 measures and reports the channel quality of the communication channel 112 and its own position. The position of the second device 106 and/or the position of the third device 108 and/or the position of the fourth device 110 may be determined by the respective device and reported as well. The position of the first device 104 and/or the position of the second device 106 and/or the position of the third device 108 and/or the position of the fourth device 110 may be determined or tracked differently.

The position may be continuously tracked, e.g. by a wireless localization system, a global positioning system, GPS, a radio frequency identification, RFID, based system and/or based on images from Radar, Lidar or optical cameras. Various well known algorithms may be used to determine the positions from the signals thereof.

Afterwards, a step 208 is executed. The step 208, the channel quality of the communication channel 112 is determined in particular from the content of the message.

Afterwards, a step 210 is executed.

In step 210, the measured channel quality of the communication channel 112 is stored assigned to the position of the first device 104. The measured channel quality of the communication channel 112 may be assigned to the position that the first device 104 is at, when the channel quality is measured. Assigned in this context refers to storing the channel quality and the position in a database or a map so that the channel quality that has been stored for the position can be looked-up based on input that identifies the position.

When the second device 106 is considered as well, the step 210 may comprise storing the channel quality assigned to the position that the second device 106 is at, when the channel quality is measured, as well.

When the third device 108 is considered as well, the step 210 may comprise storing the channel quality assigned to the position that the third device 108 is at, when the channel quality is measured, as well.

When the fourth device 110 is considered as well, the step 210 may comprise storing the channel quality assigned to the position that the fourth device 110 is at, when the channel quality is measured, as well.

The channel quality and the positions of various other devices may be stored as well. The channel quality for the first device 104 and the positions of various devices may be stored at various position of the first device 104 so that the channel quality that has been stored for these positions can be looked-up based on input that identifies these positions.

The measured channel quality may be assigned to the position of one or more of the devices that is received in the message. The channel quality value that has been measured is added to or updated in the database or the map.

The database or map may be stored in the first device 104 or on an entity, e.g. a server. The entity may be located in the wireless telecommunication network 100 or in another network connected to the wireless telecommunication network 100.

In one aspect, the database or map is created specifically for the first device 104. In one aspect, the database or map is created specifically for an area around the first device 104 or the access point 102.

The steps 202 to 210 may be repeated.

Thus, the channel quality for different positions are measured and stored. The database or map may be built for different positions of the devices, in particular while at least one of these devices is moving. The devices may be mobile but need not necessarily be able to move in order to measure and/or store the channel quality. The devices that measure and/or store the channel quality may be stationary. The devices may be sensors. In an industrial environment, a large number of such sensors, e.g. smart sensors, may be arranged. At least some of these sensors may be arranged statically. These sensors may be configured to measure their individual channel quality and send this channel quality in particular to a backend for generating the database or map. In one aspect, CQI reports for the in particular fixed positions of these sensors are made available and are used to determine the channel quality values that fill the database or the map. The resulting database or map comprises various channel quality values that are learned from movements or positions.

In one aspect, the channel quality of any available device in the industrial environment is tracked and stored. Tracking and/or storing may be performed continuously during operations in the industrial environment. The channel quality values from the database or map may be used for the same device that was used when tracking the channel quality. The channel quality values from the database or map may be used for any other device than the device that was used when tracking the channel quality as well.

In one aspect, the channel quality of the communication channel 112 for the first device 104 may be CQI3 while the device 104 is at a position (x, y, z). x, y, z denote coordinates in a coordinate system for the environment. The coordinate system may be two-dimensional (x, y) as well representing a plane in that the devices move in the environment. Then, any other device of identical or similar design or configuration that is at the position (x, y, z) at a different time under the same circumstances or similar circumstances, will have a similar channel quality for its communication channel to the access point 102. The circumstances may be defined in this example by the position of any device or structure in the environment that is relevant to radio signal transmission.

In one aspect, an average channel quality is determined and considered. This way, large scale effects are considered. Large scale effects in this context are effects on the radio signal transmission that are defined essentially by a distance between two transceivers of the communicating devices, by a transmission power of the sending transceiver, by a line of sight condition and/or a dominant transmission path in the environment. As an alternative to the average channel quality, different information may be used. In one example, a channel that is available in a worst-case may be monitored for the position (x, y, z). In this case the worst case channel condition at the position (x, y, z) that is measured for the communication channel 112 is indicative of the channel that is available for the first device 102 or any other identically or similarly designed device at position (x, y, z) even in the worst-case. In one example, a variance of a channel may be monitored for the position (x, y, z). In this case, the variance at the position (x, y, z) that is measured for the communication channel 112 is indicative of the variance of a channel for the first device 102 or any other identically or similarly designed device at position (x, y, z). The prediction of the channel may be based on this knowledge. In case the first device 102 or the other device moves close to the position (x, y, z) the prediction is available before the position (x, y, z) is reached.

The method may comprise a step 212 of determining a position of the first device 104. This position is determined in the example while or when the first device 104 is moving relative to the access point 102. The position may be determined while or when the second device 106 is moving relative to the access point 102.

The step 212 may comprise determining a position of the second device 106. This position is determined in the example while or when the second device 106 is moving relative to the access point 102. The position may be determined while or when the first device 104 is moving relative to the access point 102.

Determining the position of the first device 104 may comprise receiving position information for the first device 104 and determining the position of the first device 104 depending on a pattern representing a movement of the first device 104.

Determining the position of the second device 106 may comprise receiving position information for the second device 106 and determining the position of the second device 106 depending on a pattern representing a movement of the second device 106.

The step 212 may comprise determining a position of the third device 108. This position is determined in the example while or when the third device 108 is moving relative to the access point 102. This allows to consider effects of the third device 108 as well. In the example, the third device 108 is another user equipment. The third device 108 may also be another moving obstacle.

Determining the position of the third device 108 may comprise receiving position information for the third device 106 and determining the position of the third device 108 depending on a pattern representing a movement of the third device 108.

The fourth device 110 may be processed alike.

Afterwards, a step 214 may be executed. The step 214 comprises looking up a channel quality that is assigned to the position of the first device 106 and/or to the position of the second device 106.

The step 214 may comprise looking up a channel quality that is assigned to the position of the first device 104 and to the position of the second device 106 and to the position of the third device 108. The look up of the channel quality that is additionally assigned to the position of the fourth device 110 may be processed alike.

In one aspect, the step 214 may comprise detecting that no value for the channel quality is available at the position of the first device 104. When it is detected, that no value for the channel quality is available at the position of the first device 104, the method may comprise determining the channel quality depending on a channel quality that is stored for another position for the first device 104. Another position may be selected for any of the other devices alike for any device for that no position is found in the database.

Afterwards, a step 216 may be executed. The step 216 comprises, outputting the channel quality. The channel quality may output to another function or device.

The channel quality is for example output or transmitted to the first device 104. This way the first device 104 is informed about the predicted channel quality. The channel quality may be output to any other device as well.

The method may comprise a step 218.

In the step 218 it is determined, whether the channel quality is below a threshold or not. When the channel quality is below a threshold, at least one parameter for the communication channel 112 may be determined. When the channel quality is below this threshold or a different threshold another communication channel of the wireless communication network 100 to the same access point 102 may be selected. Alternatively a different access point may be selected for at least temporarily connecting the first device 104 in the wireless communication network 100. The first device 104 may start a hand off procedure from the access point 102 to the other access point based on the output of the channel quality.

Otherwise the communication channel 112 may be maintained. In this aspect, the parameter may not be changed and no other communication channel may be selected.

The steps 212 to 218 may be repeated.

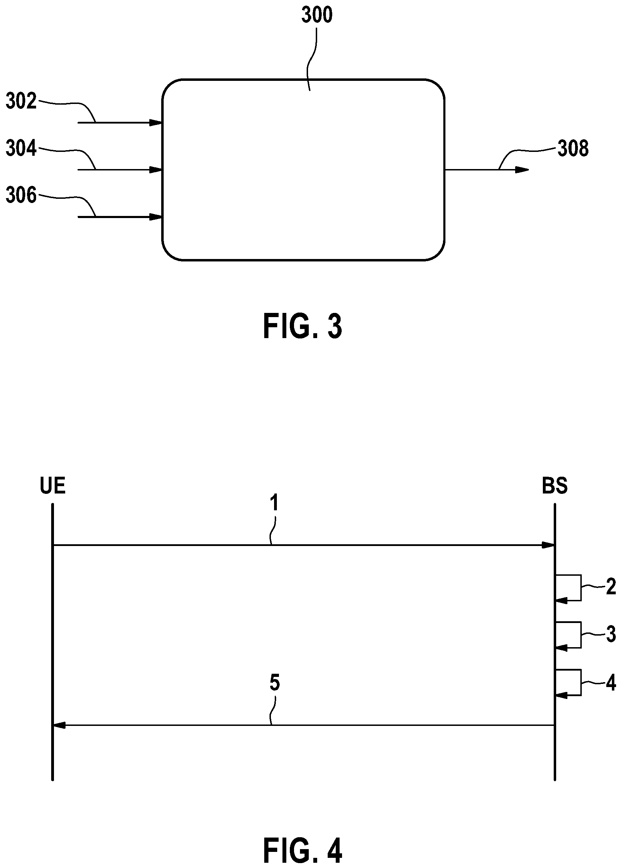

A predictor 300 for executing the method is depicted in figure 3. The predictor 300 may be a device or a function implementing logic to perform the method.

A first input 302 to the predictor 300 comprises at least one position of at least one moving obstacle.

A second input 304 to the predictor 300 comprises at least one position of at least one user equipment.

A third input 306 to the predictor 300 comprises the channel quality metric, CQM.

An output 308 of the predictor 300 comprises a prediction for a channel quality metric, CQMnew.

A prerequisite for the aspects described below may be that any obstacle, MO, is equipped with any sort of device that enables a precise tracking of the position. Increasing precision of the tracking increases the correctness of the prediction result.

The predictor 300 is provided in the example with the following information:

The positions of the devices that are considered, including the positions of any MOs, and any user equipment, UEs. The measured CQM of the communication channels or the considered UEs for these positions.

The position of a MO is provided in the example with coordinates xMO; yMO in the coordinate system. The position of a UE is provided in the example with coordinates xUE; yUE in the coordinate system.

The predictor 300 provides an adapted CQMnew, which resembles a predictive CQM value that is expected to be observed, e.g. in the near future.

The pro-active CQM adaption scheme described below comprises two processes, i.e. a learning process to fill the database or map that stores position and CQM values, and a CQM adaption process.

The learning process is described in the following. In the learning process:

1. The predictor 300 updates the position information (xMO; yMO) from the considered MOs.

2. The predictor 300 updates the position of the considered UEs: xUE; yUE, and their current CQM: CQM(xUE; yUE).

3. For one or more of the considered UEs, the current CQM value CQM(xUE; yUE) and the set of positions of all considered MOs (xMO; yMO) is collected in particular in the database or the map. Preferably, each of the considered UEs is processed like this.

4. After one or several iterations of steps 1 to 3, the predictor 300 has learned the CQM of the respective UE for multiple constellations of MOs.

The number of considered MOs can be all devices in the network or limited to an arbitrary area, e.g. within a certain vicinity around the UE. In the learning process any MO or UE that is detected in a certain area is considered. The area may correspond to a cell of the cellular system. The area may correspond to a geographic are, e.g. inside a factory.

In case the MOs have strong influence on the channel quality, e.g. if they are able to block LOS for the UE, a strong correlation between certain MO position constellations and CQM values of the UE will be observable.

After the learning, it is then possible to predict the impact on the signal reception based on a current state of MOs. The CQM adaption process is detailed in the following. In the adaptation process for one UE:

1. This UE sends a signal containing a CQM alongside with its current position (xUE; yUE) to the predictor 300.

2. The predictor 300 receives the positions of the considered MOs (xMO; yMO) or uses the last known position thereof.

3. Based on the position of the UE and the MOs, the predictor 300 searches for similar constellations of these devices in the database or map. Using e.g. mobility pattern of the MOs, the predictor 300 may determine which constellations are likely to be observed in the near future and can hence extract from the database or map previously experienced CQM values. The channel quality predicted by the predictor 300 is CQMnew(xUE; yUE).

4. Using the predicted value CQMnew(xUE; yUE), the transmission scheme may be pro-actively adjusted. Hence, a stable communication channel to the UE can be maintained.

In one aspect, CQMnew refers to a new channel quality measure for example a new channel quality indicator CQInew that is included for example in channel state information, CSI.

A prediction may be determined for example based on a current UE position xUE, yUE. In this aspect, a future position x_i_UE, y_i_UE of the UE at a time instance i may be determined starting at the current UE position and using a navigation information of the UE, a traffic pattern for the UE, and/or an estimation for the future positon of the UE.

In this aspect, the CQInew_i may be determined from the database by finding an entry in the database using the future position x_i_UE and y_i_UE of the UE. In the example, the entry in the database may be selected, that is closest to the future position x_i_UE and y_i_UE of the UE.

The prediction may be determined for example based on a current MO position xMO, yMO. In this aspect, the CQInew_i may be determined from the database by finding an entry in the database using the position x_i_MO and y_i_MO of the MO. In the example, the entry in the database may be selected, that is closest to the future position x_i_MO and y_i_MO of the MO.

The closest position may be determined from indices in the database or position information in the map, e.g. by finding a closest match.

In a worst case approach, the smallest CQInew may be selected from any CQInew_i that is available at the time instance i:

$$CQInew = min\_i(CQInew\_i)$$

AMC is for example achieved by mapping a current CQI to a Modulation and Coding Scheme, MCS. An example MCS mapping table for LTE is provided in 3GPP TS 36.213 Section 7.2 Table 7.2.3-xx.

An example workflow for AMC is as follows:

1. UE reports CSI
2. BS selects MCS based on CQI from MCS table
3. BS transmits packet with chosen MCS

Referencing Figure 4, an example workflow for AMC utilizing the predictor 300 is as follows:

1. UE reports CSI including a CQI
2. BS determines an estimated CQInew based on the position of the UE and entries from the database.
3. BS determines a risk of imminent channel degradation.
This risk is for example determined by comparing the CQI reported by the UE and the estimated CQInew. In one aspect, the risk is considered to be high, if the value of the estimated CQInew is lower than the value of the reported CQI. Otherwise the risk is considered to be low. In one aspect, the risk is set to high if the difference between the reported CQI and the estimated CQInew is larger than a threshold. Otherwise the risk is set to low.
4. If the risk of encountering frame errors soon is high, the CQInew is used to select the CQI from the MCS table. Alternatively, a robust MCS table may be used that aims for lower spectral efficiency, but lower target block error rate, TBLER. If the risk of imminent channel degradation is low, the MCS may be selected from the MCS table based on the reported CQI.
5. BS transmits packets with chosen MCS.

Exemplary, the BS can adjust the AMC such that a more robust scheme is applied in order to avoid decoding errors due to the degraded channel. In this step of the adaption process, it also possible to use other methods than AMC in order to adapt to the new channel state. One option would be to switch the BS. If it is realized that the communication channel quality is not sufficient, it is possible to perform a handover to a different BS just before LOS is obstructed. This handover may directly be initiated by the BS. In this aspect, the BS is configured to make such a handover decision in a handover preparation stage as e.g. shown in Figure 9.2.3.2.1-1 in 3GPP TS 38.300 V16.3.0. In this example, the BS is a source gNB that decides to handover the UE, based on MeasurementReport and RRM information and based on the result of the comparing of the CQI reported by the UE and the estimated CQInew described above. Another option could be to relay data over a different UE. Another option is to simply inform the UE that the channel will interrupt soon, such that actions can be made by the UE. Another option is to enable PDCP duplication if multi-connectivity is used and dynamic PDCP duplication activation/deactivation is applied. In this case, a packet is temporarily duplicated and sent over an independent BS to the same UE (or vice versa) to increase reliability and mitigate packet loss. PDCP duplication is for example implemented as described in 3GPP TS 38.323 V.16.2.0 Section 5.11. In this aspect, the BS or the UE is the transmitting PDCP entity that activates the PDCP duplication or not based on the result of the comparing of the CQI reported by the UE and the estimated CQInew described above.

In addition to the position information of MOs, other states of the MOs can be tracked as well in order to find dependencies on the experienced communication channel quality. For example other UEs in the vicinity of the considered UE can be tracked in order to determine communication channel influences caused by interference.

Optionally, mobility pattern and navigation information may be used in the prediction. For example, information about velocity and direction of one MO may be used to determine the future position of the MO and perform a proactive transmission scheme adaption more accurately.

In one aspect, using the position information of all MOs and an arbitrary CQM from each UE, such as SNR or CSI, a correlation of the MO position and CQM may be used to predict the channel quality. For each UE in the network, all MO positions may be collected alongside with the experienced CQM from the UE. These may be stored in the database or map. Based on these values, the future CQM values may be predicted based on tracked MO positions. If it is realized during transmission on the communication channel 112, that the tracked MOs reach a constellation where CQM degradation has been experienced in the past, pro-active measures may be applied to adjust e.g. the AMC in order to avoid loss of signal reception. The prediction becomes more accurate if the mobility pattern of the MOs is taken into account in the prediction process.

A technology to achieve the required connectivity in an indoor environment is for example a 5G cellular network. The 5G cellular network allows for high precision indoor positioning. With the method described above, reliability of the connection is improved, even if the wireless channel varies over time. In order to use available resources on the channel most efficiently, the channel quality may be measured continuously in order to maximize throughput of the system. In an indoor, e.g. factory, environment the MOs may be large objects or vehicles the can move around a manufacturing floor, sometimes carrying manufacturing goods or tools of large dimensions. The method above mitigates a degradation of signal reception in the wireless communication network 100 that otherwise would happen due to limited space in the indoor environment due to temporal obstruction by said moving objects.

These events often happen periodically, since the manufacturing process usually consists of repetitive tasks. Consequently, any temporal impairments of signal reception that the devices may experience may be measured and stored in the learning process for mitigating the degradation in the CQM adaptation process.

The method described above may be used to predict for each UE the impact on the channel quality by other devices in the network coverage area while leveraging position information that is already at hand in the wireless telecommunication network 100. Based on this prediction, the communication scheme may be adjusted accordingly in order to maintain a stable connection.

Due to the prediction, the adaptation happens before the signals or frames with information that are transferred through communication channels are not received error-free. This allows error-free reception even if some adaption time is required to adjust to the new channel or the new parameters. For some time-critical applications, there is no interruption that causes unacceptable latency increase

**Claims**

1. A method for operating a wireless communication network (100), wherein a communication channel (112) of the wireless communication network (100) at least temporarily connects a first device (104) to an access point (102) in the wireless communication network (100), wherein the method is **characterized by** determining (212) a position of the first device (104) or of a second device (106) that is moving relative to the access point (102), looking up (214) a channel quality of the communication channel (112) that is assigned to the position, and outputting (216) the channel quality.

2. The method according to claim 1, **characterized by** determining (202) the position of the first device (104), measuring (204) the channel quality of the communication channel (112) when the first device (104) is at this position, and storing (210) the measured channel quality of the communication channel (112) assigned to this position.

3. The method according to claim 2, **characterized by** receiving (206) a message comprising the measured channel quality of the communication channel (112) and comprising the position.

4. The method according to one of the preceding claims, **characterized in that** determining (212) the position of the first device (104) comprises receiving position information for the first device (104) and determining the position of the first device (104) depending on a pattern representing a movement of the first device (104), and/or **in that** determining (212) the position of the second device (106) comprises receiving position information for the second device (106) and determining the position of the second device (106) depending on a pattern representing a movement of the second device (106).

5. The method according to one of the preceding claims, **characterized by** storing (210) the channel quality assigned to a position of the first device (104), in particular the position of the first device (104) when the channel quality is measured or the position of the first device when the message is received, and assigned to the position of the second device (106), in particular assigned to the position of the second device (106) when the channel quality is measured or assigned to the position of the second device (106) that is received in the message.

6. The method according to one of the preceding claims, **characterized by**, when the channel quality is below a threshold, determining (218) at least one parameter for the communication channel (112) and otherwise not changing the parameter.

7. The method according to one of the claims 1 to 5, **characterized by**, when the channel quality is below a threshold, selecting (218) another communication channel of the wireless communication network (100) to the same access point (102) or to a different access point for at least temporarily connecting the first device (104) and otherwise not selecting another communication channel.

8. The method according to one of the preceding claims, **characterized by** determining (208) and/or storing (210) the channel quality for different positions of the first device (104) and/or the second device (106).

9. The method according to one of the preceding claims, **characterized by** determining (212) a position of a third device (108) that is moving relative to the access point (102), looking up (214) the channel quality that is assigned to the position of the first device (104) and that is assigned to the position of the second device (106) and that is assigned to the position of the third device (108).

10. The method according to claim 9, **characterized by** determining (202) the position of the second device (106) and determining (202) the position of the third device (108), measuring (204) the channel quality when the second device (106) is at this position of the second device (106), and when the third device (108) is at this position of the third device (108), and storing (210) the channel quality assigned to this position of the second device (106) and assigned to this position of the third device (108).

11. The method according to one of the preceding claims, **characterized by** detecting that no value for the channel quality is available at the position of the first device (104), determining the channel quality depending on a channel quality that is stored for another position for the first device (104).

12. A device for operating a wireless communication network (100), **characterized in that** the device is adapted to perform steps of the method according to one of the claims 1 to 11.

13. Computer program, **characterized in that** the computer program comprises instructions for a computer that, when executed by the computer, cause the computer to perform the steps according to the method of one of the claims 1 to 11.

**FIG. 1**

**FIG. 2**

300

302

304

306

308

## FIG. 3

UE

BS

1

2

3

4

5

## FIG. 4

Europäisches
Patentamt

European
Patent Office

Office européen
des brevets

# EUROPEAN SEARCH REPORT

**Application Number**

EP 20 21 4872

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | DI TARANTO ROCCO ET AL: "Location-Aware Communications for 5G Networks: How location information can improve scalability, latency, and robustness of 5G", IEEE SIGNAL PROCES SING MAGAZINE, IEEE SERVICE CENTER, PISCATAWAY, NJ, US, vol. 31, no. 6, 1 November 2014 (2014-11-01), pages 102-112, XP011561532, ISSN: 1053-5888, DOI: 10.1109/MSP.2014.2332611 [retrieved on 2014-10-15] | 1-3,7,8, 11-13 | INV. H04W36/00 H04W24/08 H04W64/00<br><br>ADD. H04W36/30 H04W48/16 |
| A | * page 1 - page 11 * ----- | 5 | |
| X | US 2014/179332 A1 (QIAN YU [CN] ET AL) 26 June 2014 (2014-06-26) | 1-4,6,8, 11-13 | |
| A | * paragraph [0024] - paragraph [0025] * * paragraph [0039] - paragraph [0073] * * figure 4 * ----- | 5 | |
| A | US 2014/278044 A1 (JACOBS AARON JOSEPH [AU] ET AL) 18 September 2014 (2014-09-18) * paragraph [0006] - paragraph [0012] * * figures * ----- | 1-13 | **TECHNICAL FIELDS SEARCHED (IPC)**<br><br>H04W |

The present search report has been drawn up for all claims

| Place of search | Date of completion of the search | Examiner |
|---|---|---|
| Munich | 2 June 2021 | Aguilar Cabarrus, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 20 21 4872

This annex lists the patent family members relating to the patent documents cited in the above-mentioned European search report.
The members are as contained in the European Patent Office EDP file on
The European Patent Office is in no way liable for these particulars which are merely given for the purpose of information.

02-06-2021

| Patent document cited in search report | | | Publication date | Patent family member(s) | | | Publication date |
|---|---|---|---|---|---|---|---|
| US 2014179332 | A1 | | 26-06-2014 | CN | 104919881 | A | 16-09-2015 |
| | | | | EP | 2936906 | A1 | 28-10-2015 |
| | | | | US | 2014179332 | A1 | 26-06-2014 |
| | | | | WO | 2014094282 | A1 | 26-06-2014 |
| US 2014278044 | A1 | | 18-09-2014 | CN | 105122913 | A | 02-12-2015 |
| | | | | DE | 202014011002 | U1 | 03-04-2017 |
| | | | | EP | 2974482 | A1 | 20-01-2016 |
| | | | | US | 2014278044 | A1 | 18-09-2014 |
| | | | | WO | 2014152462 | A1 | 25-09-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **R. DI TARANTO ; S. MUPPIRISETTY ; R. RAULEFS ; D. SLOCK ; T. SVENSSON ; H. WYMEERSCH.** Location-aware communications for 5g networks: How location information can improve scalability, latency, and robustness of 5g. *IEEE Signal Processing Magazine,* 2014, vol. 31 (6), 102-112